# EUROPEAN PATENT SPECIFICATION

(11) **EP 3 742 202 B1**
(45) Date of publication and mention of the grant of the patent: **06.09.2023**
(21) Application number: 20173183.3
(22) Date of filing: 06.05.2020
(51) Int. Cl.: G01S 19/36

(54) **DIGITAL CONTROLLED RECEPTION PATTERN ANTENNA FOR SATELLITE NAVIGATION**
DIGITALE ANTENNE MIT GESTEUERTEM EMPFANGSMUSTER FÜR SATELLITENNAVIGATION
ANTENNES À MOTIF DE RÉCEPTION CONTRÔLÉE NUMÉRIQUE POUR NAVIGATION PAR SATELLITE

(30) Priority: 23.05.2019 US 201916420529
(43) Date of publication of application: 25.11.2020
(73) Proprietor: The Boeing Company, Arlington, VA 22202 (US)
(72) Inventor: MURPHY, Timothy Allen, Chicago, IL 60606-1596 (US); HARRIS, William Matthew, Chicago, IL 60606-1596 (US)
(74) Representative: Smith, Jeremy Robert

(56) References cited:
- WO-A2-2015/105543
- US-A1- 2016 036 519
- RAMI AKEELA ET AL: "Software-defined Radios: Architecture, State-of-the-art, and Challenges", ARXIV.ORG, CORNELL UNIVERSITY LIBRARY, 201 OLIN LIBRARY CORNELL UNIVERSITY ITHACA, NY 14853, 18 April 2018 (2018-04-18), XP080871936,

## Description

### BACKGROUND

This disclosure generally relates to navigation systems and, in particular, relates to satellite navigation systems operating in environments prone to jamming and spoofing.

The receiver of a global navigation satellite system (GNSS) is typically designed to acquire and track signals having specified characteristics. The antenna typically receives the signals and translates the received signals to a voltage and an impedance that is compatible with the GNSS receiver. Two antenna properties relevant to this disclosure are reception pattern and interference handling. The reception pattern of an antenna is the spatial variation of the gain or the ratio of the power delivered by the antenna for a signal arriving from a particular direction compared to the power delivered by a hypothetical isotropic reference antenna. GNSS signals arrive from many directions simultaneously, and so most GNSS receiving antennas tend to be omni-directional in azimuth. Such an antenna may be susceptible to interference from signals arriving from one or more directions in addition to the GNSS signals arriving from the satellites. In some cases an array of antenna elements are used in a GNSS antenna in order to have beams that can be steered toward satellites and nulls that can be steered toward interference sources. Such GNSS antennas are known as controlled radiation pattern antennas (CRPA) and are a well-known tool for combating GNSS interference and spoofing.

Because a GNSS signal is relatively weak, it takes very little jamming to bring down navigational capability. Under some circumstances, jamming and/or unintentional interference reduce the reliability of a satellite navigation system, especially in certain military or safety-of-life applications. Interference effects may be reduced by adjusting the reception pattern to null-out the interfering signals or to maximize the gain in the directions of all legitimate signals. Such a CRPA is typically constructed using an array of antenna elements (hereinafter "CRPA array"). The signals from the antenna elements are combined before feeding them to a GNSS receiver.

A GNSS receiver typically includes a processor or computer configured to receive and digitally process the signals from a GNSS satellite constellation in order to provide position, velocity and time (of the receiver). GNSS receivers have been traditionally implemented in hardware using a dedicated chip. In a software GNSS receiver, all digital processing is performed by a processor, for example, a field programmable gate array, a graphics processing unit or a microprocessor. In this approach, other hardware in the front end of the receiver digitizes the signal from the satellites. The processor can then process this raw digital stream to implement the GNSS functionality.

CRPAs are well known to be an effective means of mitigating satellite navigation intentional or unintentional interference. In addition, a CRPA is effective in mitigating most types of spoofing attacks that could be made against a satellite navigation system. CRPA solutions for military applications have existed for decades and some commercial CRPA products have been introduced recently. However, one problem with current CRPA designs is that a CRPA is expensive and complex to the point that CRPAs have been unaffordable and impractical for most commercial aviation applications.

Conventional CRPA designs involve multiple elements with independent RF paths between the antenna and the receiver. Previous generations of CRPA receivers included analog combining networks in order to form beams and/or nulls in the reception pattern as needed to address interference or spoofing signals. The systems would typically include RF cables for each element to a receiver with many RF inputs and separate front ends for each element. More contemporary designs are similar except that the signals from each element are digitized separately and the beamforming networks are replaced by digital signal processing algorithms that achieve the same beam-forming and nulling results. Implementing multiple cables increases weight and complexity and also introduces many potential failure modes and various sources of phase variation that must be calibrated before effective digital beam forming algorithms can be implemented. For a commercial air transport application where the satellite navigation antenna is physically installed many feet from the antenna, bundles of RF cables are impractical due to increased weight and cost and the introduction of potential sources of failure (e.g., connectors).

US 2016/0036519 A1, in accordance with its abstract, states: a method for capturing ionospheric data. In accordance with one embodiment, a plurality of phase-coherent signals transmitted by at least one Global Navigation Satellite System (GNSS) satellite is received via a mobile multi-frequency GNSS receiver. Respective code phase data and carrier phase data for each of said plurality of phase coherent signals are derived using a software defined GNSS receiver operating on a processor of a first communication device of the multi-frequency GNSS receiver. Respective code phase data and carrier phase data for each of the plurality of phase-coherent signals is stored in a data storage device. The respective code phase data and carrier phase data is appended with a respective time-stamp and position fix. An ionospheric sample based upon respective code phase data and carrier phase data of said plurality of phase-coherent signals is wirelessly transmitted to a second location.

### SUMMARY

In an aspect of the present invention there is provided a navigation system as defined in claim 1. In a further aspect of the present invention there is provided a method for operating a navigation system as defined in claim 12.

The subject matter disclosed in some detail below is directed to a satellite navigation system mounted onboard a vehicle and including a digital controlled reception pattern antenna (DCRPA) that is designed to ameliorate one or more of issues identified above. In accordance with some embodiments, the onboard satellite navigation system includes a DCRPA subsystem and a GNSS receiver. The overall system is designed so that all radio frequency (RF) processing and digital sampling are incorporated in the DCRPA subsystem. The RF signal from each element of the DCRPA array is digitized separately. Then the resultant digital samples are combined into a single bit stream which is transmitted to the GNSS receiver. (Thus, as used herein, the term "DCRPA" refers to an antenna subsystem that is partly, not entirely digital.) Preferably the GNSS receiver is a software defined radio. The arrangement allows the DCRPA array and the GNSS receiver to be connected with a single coaxial cable. Such an arrangement would allow simple retrofit of DCRPAs to existing airframe designs and lower cost installations of CRPA capabilities on new aircraft designs.

In accordance with CRPA design proposed herein, all of the front-end RF processing and digitization of the independent signals from the antenna elements are included in the antenna subsystem (hereinafter "DCRPA") instead of in the GNSS receiver. By doing so, the RF paths between antenna elements are under greater control, and the element-to-element phase variations are more stable and therefore more easily calibrated. The design proposed herein takes the digitized samples from each independent antenna element and multiplexes the digitized samples into a single bit stream, which is then used to modulate a single carrier at a relatively high frequency. Multiple carriers on different frequencies could also be used. In fact any combination of carriers and modulation schemes can be used as long as the sampled bit streams from each element can be recovered by the receiver. As previously mentioned, that signal (or signals) is (are) then transmitted to the GNSS receiver (e.g., a software defined radio) over a single RF cable. The GNSS receiver may be situated very far from the antenna without any degradation in the positioning accuracy as the carrier-to-noise ratio is set in the antenna subsystem. The RF link between the antenna subsystem and the GNSS receiver is engineered to give an acceptably low bit error rate to ensure continuity of service. The same RF cable may optionally provide power and a clock signal (for synchronization of the antenna electronics) from the receiver to the antenna subsystem. The clock signal may also be modulated with information that could be used to control or change some aspects of the configuration of the antenna subsystem (such as automatic gain control and antenna element selection). In an alternate embodiment, the DCRPA may include a clock, so the GNSS software defined radio need not provide a clock signal. The transmission of modulated bit streams in one direction and clock signals in an opposite direction in the cable connecting the antenna subsystem and the GNSS receiver is accomplished using passive devices that implement reciprocal frequency-domain multiplexing/demultiplexing, such as diplexers or triplexers.

In accordance with alternative embodiments, a fiber optic cable (or other bidirectional optical interface) could be employed between the antenna subsystem and the receiver (instead of an RF cable). Instead of triplexers of the type described above, such a system would include respective dual-wavelength single-fiber bidirectional transceivers that transmit modulated bit streams in one direction and clock signals in an opposite direction in the fiber optic cable using wavelength-division multiplexing/demultiplexing. In this case, an alternative source of power for the antenna electronics would be necessary. The bidirectional optical interface could still be used to provide a synchronization clock (and potentially data) to the antenna electronics.

The major advantage of using a single RF cable to interface a DCRPA and a GNSS software defined radio (SDR) is that it enables retrofit of DCRPAs into existing installations and simpler less expensive installations on new aircraft designs. In one proposed implementation, a DCRPA is physically mounted in the same footprint currently used by ARINC 743 standard GNSS antennas, which are widely used on aircraft. The SDR may be implemented in the exact form factor used for the ARINC 755 multi-mode receiver (MMR). Digital beam forming algorithms would be implemented in the MMR software. Then the implementation of a DCRPA on any MMR-equipped airplane would be achieved by replacing the antenna subsystem and then replacing the line replaceable MMR unit. No wiring changes would be required in order to gain the significant anti-jam and anti-spoofing capabilities provided by a CRPA. Furthermore, other form factors for the SDR part of the system could be employed to achieve the same ease of retrofit for other aircraft types. Aviation GNSS receiver implementations typically involve a single RF cable between the receiver and the antenna subsystem. The arrangement newly described herein could also be deployed on drones and unmanned platforms. In addition, the transportation sector (e.g., positive train control, intelligent highway systems, self-driving cars) could benefit from the systems and methods described herein.

Another major benefit of the DCRPA arrangement proposed herein is that the digital data signal coming from the DCRPA can be split and fed to any desired number of SDR processing units. Thus, a single DCRPA can provide GNSS signal reception to multiple GNSS receivers without any degradation in the C/No or position accuracy of the system. Similarly, an SDR unit could receive digital data streams from multiple DCRPA units, thereby potentially enabling multiple DCRPA subsystems to be deployed in an array of DCRPAs. This enables some potentially very flexible redundancy management architectures.

Although various embodiments of onboard systems and methods for enabling satellite navigation by a vehicle (e.g., an aircraft) will be described in some detail below, one or more of those embodiments may be characterized by one or more of the following aspects.

One example useful for understanding the subject matter disclosed in detail below is a navigation system comprising a cable, a GNSS software defined radio electrically connected to one end of the cable, and an antenna subsystem electrically connected to another end of the cable, wherein the antenna subsystem comprises: first and second antenna elements; first and second means for radio frequency processing respectively electrically connected to the first and second antenna elements; first and second means for digital sampling respectively electrically connected to the first and second means for radio frequency processing; a serializer configured to interleave digital samples received from the first and second means for digital sampling to form a bit stream; an RF modulator configured to convert the bit stream into a modulated bit stream; and an antenna/cable interface that couples the RF modulator to the cable. The GNSS software defined radio comprises an RF demodulator and a radio/cable interface that couples the RF demodulator to the cable, the RF demodulator being configured to recover the bit stream from the modulated bit stream. The GNSS software defined radio further comprises a software defined radio processor configured to process the bit stream recovered by the RF demodulator to produce a controlled reception pattern.

Another example useful for understanding the subject matter disclosed in detail below is a navigation system comprising a cable, a GNSS software defined radio electrically connected to one end of the cable, and an antenna subsystem electrically connected to another end of the cable, wherein the antenna subsystem comprises: a plurality of antenna elements; a plurality of radio frequency processing circuits respectively electrically connected to the plurality second antenna elements; a plurality of analog-to-digital converters respectively electrically connected to the plurality of radio frequency processing circuits; a serializer configured to interleave digital samples received from the plurality of analog-to-digital converters to form a bit stream; an RF modulator configured to convert the bit stream into a modulated bit stream; and an antenna/cable interface that couples the RF modulator to the cable, wherein each radio frequency processing circuit of the -plurality of radio frequency processing circuits comprises a filter, a low-noise amplifier and a quadrature mixer electrically connected in series.

A further example useful for understanding the subject matter disclosed in detail below is a method for operating a navigation system comprising a GNSS software defined radio connected to one end of a cable by a radio/cable interface and an antenna subsystem connected by another end of the cable by an antenna/cable interface, the method comprising: (a) radio frequency processing signals received from a plurality of antenna elements to produce IF signals; (b) digital sampling the IF signals to produce I and Q samples; (c) interleaving the I and Q samples to form a bit stream; (d) converting the bit stream into a modulated bit stream; and (e) sending the modulated bit stream to the cable via an antenna/cable interface, wherein steps (a) through (e) are performed within the antenna subsystem. In accordance with some embodiments, the method further comprising sending a clock signal and supplying DC power from the GNSS software defined radio to the antenna subsystem via the cable.

Yet another example useful for understanding the subject matter disclosed in detail below is a method for retrofitting a vehicle to include a controlled reception pattern antenna, comprising: disconnecting an existing GNSS receiver onboard the vehicle from one end of an RF cable; removing the disconnected GNSS receiver from the vehicle; disconnecting an existing antenna from another end of the cable; removing the disconnected antenna from the vehicle; placing a GNSS software defined radio onboard the vehicle; electrically connecting the GNSS software defined radio to the one end of the cable; placing an antenna subsystem onboard the vehicle; and electrically connecting the antenna subsystem to the other end of the RF cable.

Other aspects of onboard systems and methods for enabling satellite navigation by a vehicle are disclosed below.

### BRIEF DESCRIPTION OF THE DRAWINGS

The features, functions and advantages discussed in the preceding section may be achieved independently in various embodiments or may be combined in yet other embodiments. Various embodiments will be hereinafter described with reference to drawings for the purpose of illustrating the above-described and other aspects. None of the diagrams briefly described in this section are drawn to scale.
FIG. 1 is a block diagram identifying some components of a system for enabling satellite navigation by a vehicle in accordance with one embodiment.
FIG. 2 is a diagram identifying some features of a bidirectional full-duplex data transmission system comprising one pair of dual-wavelength single-fiber bidirectional transceivers.
FIG. 3 is a flowchart identifying steps of a method for retrofitting a vehicle to incorporate the satellite navigation system disclosed herein.
FIG. 4 is a block diagram identifying components of a satellite navigation system in accordance with one embodiment in which two DCRPAs are cross connected to two GNSS software defined radios.

Reference will hereinafter be made to the drawings in which similar elements in different drawings bear the same reference numerals.

### DETAILED DESCRIPTION

Illustrative embodiments of onboard systems and methods for enabling satellite navigation by a vehicle are described in some detail below. However, not all features of an actual implementation are described in this specification. A person skilled in the art will appreciate that in the development of any such actual embodiment, numerous implementation-specific decisions must be made to achieve the developer's specific goals, such as compliance with system-related and business-related constraints, which will vary from one implementation to another. Moreover, it will be appreciated that such a development effort might be complex and time-consuming, but would nevertheless be a routine undertaking for those of ordinary skill in the art having the benefit of this disclosure.

The following detailed disclosure describes systems, methods, and apparatus for a satellite navigation system having a DCRPA. Certain specific details are set forth in the following description and the figures to provide a thorough understanding of various embodiments. Well-known structures, systems, and methods often associated with aircraft navigation, communication, control, display, and flight management systems have not been shown or described to avoid unnecessarily obscuring the description of the various embodiments. In addition, those of ordinary skill in the relevant art will understand that additional embodiments may be practiced without several of the details described below.

The embodiments described below may take the form of computer-executable instructions, such as routines executed by a programmable computer. Those skilled in the relevant art will appreciate that the satellite navigation technology can be practiced on other computer system configurations as well. The data processing system may be embodied in a special-purpose computer or data processor that is specifically programmed, configured, or constructed to perform one or more of the computer-executable instructions described below. Accordingly, the term "computer" as generally used herein refers to any data processor that can be engaged onboard an aircraft, including computers for navigation radios such as multi-mode receivers (MMR), instrument landing system receivers, cockpit display systems, flight management computers, flight control computers, electronic flight bags, laptops, tablet computers, or other hand-held devices.

The teaching disclosed hereinafter can also be practiced in distributed computing environments, in which tasks or modules are performed via remote processing devices that are linked through a communication network such as those enabled via datalink by the aircraft communication systems. In a distributed computing environment, program modules or subroutines may be located in both local and remote memory storage devices. The navigation data acquired using the system described below may be stored or distributed on computer-readable media, including magnetic or optically readable computer disks (e.g., removable disks), as well as distributed electronically over networks, such networks including ground-based and satellite-based components of navigation systems. Information handled in accordance with aspects of the subject matter disclosed herein can be presented on displays or display media, for example, CRT screens, LCD screens, head-up displays, touch screens, or other suitable display devices.

As used herein, the term "global navigation satellite system" (GNSS) includes any satellite system(s) or combination thereof for determining position (e.g., the Global Positioning System (GPS), Galileo, Baidou, Globalnaya Navigazionnaya Sputnikovaya Sistema (GLONASS), etc.). A global navigation satellite system provides geolocation and time information to a GNSS receiver anywhere on or near the Earth where there is an unobstructed line of sight to four or more GNSS satellites. In the detailed description that follows, an example implementation will be described which employs GPS signals.

In some instances, a GPS signal is not obtainable or the GPS signal is relatively weak (e.g., insufficient), referred to herein as a GPS-denied or a GPS-stressed environment. A GPS-denied environment may be caused by a variety of factors such as the terrain, the weather, radio frequency interference, intentional jamming (e.g., a spoofing attack or a malicious jammer), etc. If an aircraft is far from its destination (e.g., a base) and enters a GPS-denied environment, the aircraft may fly a considerable distance to reach an area in which GPS signals may again be processed in a reliable manner.

The system disclosed in some detail below is a satellite navigation system mounted onboard a vehicle that includes a DCRPA. In accordance with some embodiments, the onboard satellite navigation system includes a DCRPA subsystem and a GNSS receiver. The overall system is designed so that all radio frequency (RF) processing and digital sampling are incorporated in the DCRPA subsystem. The RF signal from each element of the array is digitized separately. Then the resultant digital samples are combined using a serializer into a single bit stream which is transmitted to the GNSS receiver. Preferably the GNSS receiver is a software defined radio. This arrangement allows the DCRPA subsystem and the GNSS receiver to be connected with a single coaxial cable. Such an arrangement would allow simple retrofit of DCRPA subsystems to existing airframe designs as well as new airplane designs.

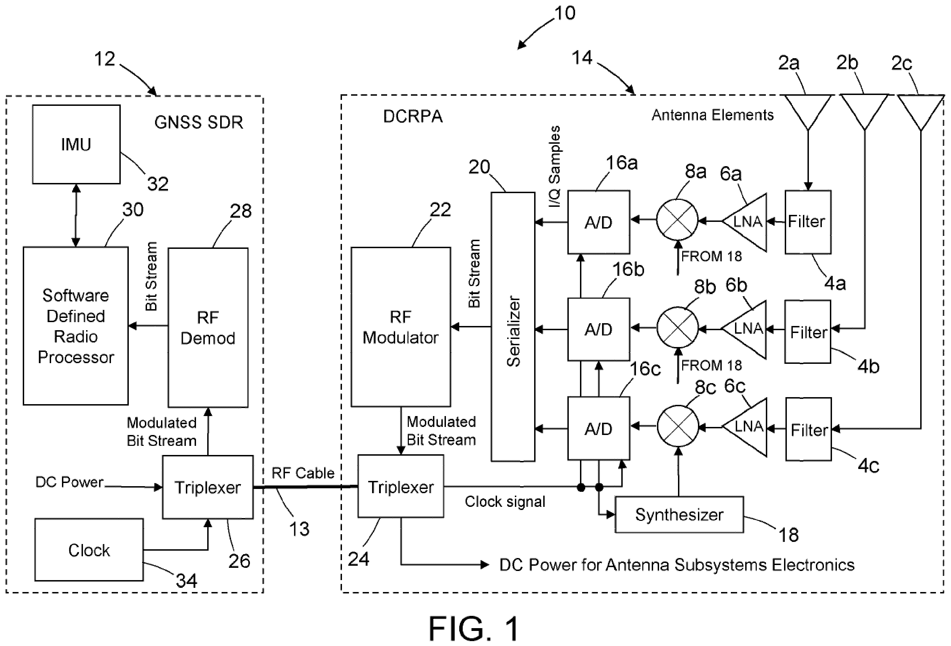

FIG. 1 is a block diagram identifying some components of an onboard satellite navigation system 10 in accordance with one embodiment. The system is capable of mitigating satellite navigation interference and some types of spoofing attacks onboard a vehicle. The onboard satellite navigation system 10 includes a GNSS software defined radio 12 (hereinafter "GNSS SDR 12"; indicated by a dashed rectangle in FIG. 1), a DCRPA subsystem 14 (indicated by a dashed rectangle in FIG. 1), and an RF cable 13 connecting the DCRPA subsystem 14 to the GNSS SDR 12. For example, the onboard satellite navigation system 10 having the components identified in FIG. 1 may be installed on new airplanes and on airplanes which are already in service. In the latter case, the existing GNSS receiver and CRPA (connected by a single RF cable) onboard the airplane may be removed and respectively replaced by GNSS SDR 12 and DCRPA subsystem 14 without removing the RF cable 13 or installing additional RF cables.

Still referring to FIG. 1, the DCRPA subsystem 14 includes the RF electronics and analog-to-digital (A/D) converters to independently digitize the signals received on each antenna element. The exemplary embodiment shown in FIG. 1 has three antenna elements 2a-2c, but the concept of incorporating all RF processing and digital sampling in the DCRPA subsystem 14 may be extended to any number of antenna elements, limited ultimately only by the bandwidth of the RF cable 13 and choice of sampling rates and resolution.

FIG. 1 shows that the antenna elements 2a-2c are electrically connected to respective filters 4a-4c. The filtered RF signals output from the filters 4a-4c are respectively input to respective low-noise amplifiers 6a-6c. The amplified RF signals output by the low-noise amplifiers 6a-6c are in turn input to respective quadrature mixers 8a-8c. The quadrature mixers 8a-8c also receive an appropriate intermediate frequency (IF) signal from a synthesizer 18, which IF signal is mixed with the respective RF signals output by the low-noise amplifiers 6a-6c. The synthesizer 18 may be a frequency synthesizer of standard design which permits the DCRPA subsystem 14 to be tuned to any of the frequencies within the receive frequency band of the system. The filters 4a-4c, low-noise amplifiers 6a-6c and quadrature mixers 8a-8c condition the respective RF signals from antenna elements 2a-2c prior to analog-to-digital conversion by respective analog-to-digital converters 16a-16c. The analog-to-digital converters 16a-16c converts the analog signals output from quadrature mixers 8a-8c to digital in-phase/quadrature (I/Q) samples in well-known manner.

Note that not every element of the RF front end processing is shown for the sake of simplicity, but only those elements sufficient to illustrate the concept disclosed herein. Design of satellite navigation receiver front ends is well understood in the state of the art and no limitations are implied by omissions in FIG. 1.

Referring again to FIG. 1, the DCRPA subsystem 14 receives DC power and a clock signal from the GNSS SDR 12 via the RF cable 13, which is a single coaxial cable connection. The clock signal is used in the DCRPA subsystem 14 to clock the analog-to-digital converters 16a-16c and also to synthesize an appropriate IF frequency used in down conversion of each RF signal to an intermediate frequency used for RF sampling. Note that alternatively, direct sampling techniques may be used without down conversion. However, the state of the art in analog-to-digital conversion would make such an arrangement expensive, and the RF bandwidth that would be required on the RF cable 13 would be large. Although a conventional down-convert and digitize arrangement is shown in FIG. 1, other arrangements are possible. For example, with sufficiently powerful analog-to-digital converters, direct sampling of the RF spectrum is possible.

After analog-to-digital conversion, the I/Q samples are multiplexed and interleaved into a single bit stream by serializer 20. The bit stream includes extra bits identifying (hereinafter "source antenna element identifier") the antenna element that received the RF signal that was encoded with those bits (hereinafter "source element identifier bits"). That bit stream is output to an RF modulator 22 which is configured to modulate a constant-frequency reference signal (hereinafter "carrier wave"). The resulting digitally modulated signal will be referred to hereinafter as the "modulated bit stream". Any suitable digital modulation format. For example, the digital modulation could be simple bipolar phase-shift keying or alternatively 256 quadrature amplitude modulation. In addition, the bit stream could be divided and modulated in parallel onto multiple carriers set at different frequencies. Any arrangement that would allow the digital data streams from the individual elements to be transmitted on a single cable and recovered and reconstructed in the software receiver would be acceptable. Error correction codes could be employed to ensure sufficiently low bit error rates. The modulated bit stream is then introduced to an antenna-side triplexer 24. The antenna-side triplexer 24 sends the modulated bit stream to a receiver-side triplexer 26 incorporated in the GNSS SDR 12 via the single RF cable 13.

The interleaving algorithm performed by the serializer 20 may be used to provide a degree of security to keep the DCRPA subsystem 14 from being used in a non-sanctioned receiver design. Only a GNSS SDR 12 that is properly programmed to de-interleave the data appropriately would be able to use the DCRPA subsystem 14. This concept could be extended to add any encryption desired on the bit stream to ensure that the antenna could not be incorporated into a non-sanctioned or unauthorized design. Only a receiver with the proper decryption algorithms and keys would be able to use the antenna.

The receiver-side triplexer 26 allows the modulated bit stream from the DCRPA subsystem 14 to be isolated from direct-current (DC) power and the clock (and optionally control data) signal (modulated at a much lower frequency than the frequency used to produce the modulated bit stream) which are sent from the GNSS SDR 12 to the DCRPA subsystem 14. As seen in FIG. 1, DC power is supplied from a DC power source (not shown) to the electronic components of DCRPA subsystem 14 by way of receiver-side triplexer 26, RF cable 13 and antenna-side triplexer 24. Similarly, clock signals generated by clock 34 incorporated in the GNSS SDR 12 are sent to the analog-to-digital converters 16a-16c and to the synthesizer 18 of DCRPA subsystem 14 by way of receiver-side triplexer 26, RF cable 13 and antenna-side triplexer 24. The clock signal may also be modulated with information that could be used to control or change some aspects of the configuration of the DCRPA subsystem 14, such as automatic gain control and antenna element selection. In accordance with alternative embodiments, DC power may be supplied to the antenna subsystem by a path other than the cable, in which case the triplexers may be replaced by diplexers.

A diplexer is a device which separates a received signal into two frequency ranges within the received signal. Conventional diplexers comprise discrete circuit components to bandpass, high-pass or low-pass filter a received signal into two frequency ranges. A diplexer frequency multiplexes two ports onto one port, but more than two ports may be multiplexed. In contrast, the triplexers referred to herein are three-port to one-port multiplexers. The triplexer combines/ separates three frequency bands, a higher-frequency band, a lower-frequency band and a very-low-frequency band (including DC).

Thus the electrical current passing through the RF cable 13 has three components: (1) the modulated bit stream, which is in the higher-frequency band and travels from the DCRPA subsystem 14 to the GNSS SDR 12; (2) the DC power, which takes the form of a voltage on the center conductor (relative to the coax shield) of the RF cable 13, which voltage produces DC in the very-low-frequency band that flows from GNSS SDR 12 to the DCRPA subsystem 14; and (3) the clock signal, which is in the lower-frequency band and travels from the GNSS SDR 12 to the DCRPA subsystem 14.

Upon exiting the triplexer 16, the modulated bit stream is demodulated by an RF demodulator 28 incorporated in the GNSS SDR 12 to recover the original bit stream. The RF demodulator 28 sends that bit stream to an software-defined radio processor 30 (hereinafter "SDR processor 30"). The SDR processor 30 is configured such that the incoming bit stream is demultiplexed, de-interleaved and decrypted as needed to recover the I and Q samples for each of the signals from the antenna elements 2a-2c. For example, SDR processor 30 identifies the antenna element that was the source of the interleaved bits by reading the source element identifier bits. (In accordance with alternative embodiments, the source of each segment of the bit stream may be identified using commands from the GNSS SDR 12 or using the clock signals to synchronize interleaving.) At this stage of the processing, any one of many well-known techniques for digital beam forming may be applied. The samples from the independent antenna elements 2a-2c are multiplied by appropriate phase and amplitude factors and then summed to form a single stream of samples. This process can be performed multiple times to form digitized samples with different effective antenna patterns.

From this point on, the digital signals can be processed by the SDR processor 30 as in any conventional software defined GNSS receiver. For example, the SDR processor 30 is preferably configured to search for multiple copies of codes. The SDR processor 30 may also process data received from a tightly coupled inertial measurement unit 32 (hereinafter "IMU 32") incorporated in the GNSS SDR 12 using extended code integration intervals. An inertial measurement unit is an electronic device that measures and reports a vehicle's acceleration, angular rate, and sometimes the magnetic field surrounding the body, using a combination of accelerometers and gyroscopes. The IMU 32 allows the GNSS SDR 12 to work when GPS signals are unavailable, such as when electronic interference is present. The data reported by the IMU 32 is fed into the GNSS SDR 12, which calculates the attitude, velocity and position of the vehicle.

In accordance with alternative embodiments, a fiber optic cable (or other bidirectional optical interface) could be employed between the antenna subsystem and the receiver instead of an RF cable. Instead of triplexers of the type described above, such a system would include respective dual-wavelength single-fiber bidirectional transceivers that transmit modulated bit streams in one direction and clock signals in an opposite direction using wavelength-division multiplexing/demultiplexing. In this case, an alternative source of power for the antenna electronics would be necessary. The bidirectional optical interface could still be used to provide a synchronization clock (and potentially data) to the antenna electronics.

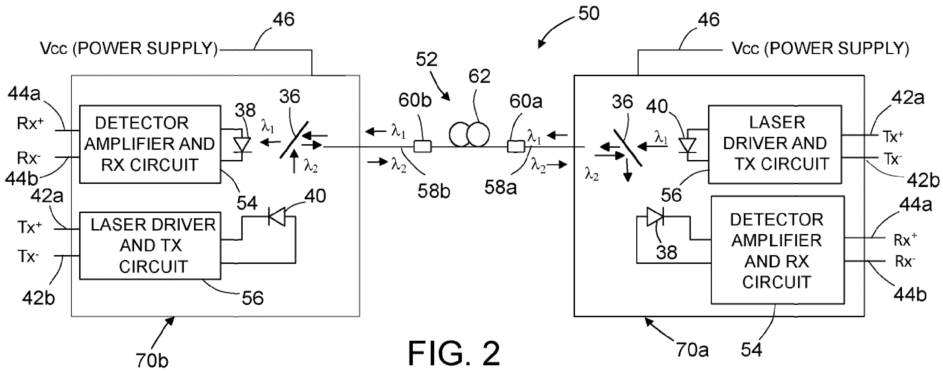

FIG. 2 is a diagram identifying some features of a bidirectional full-duplex data transmission system 50 comprising one pair of dual-wavelength single-fiber bidirectional transceivers 70a and 70b. As disclosed in U.S. Patent Application No. 15/802,523, each transceiver transmits and receives light of the same wavelength. [As used herein, the term "wavelength" in the context of coherent laser light means the center wavelength of laser light having a narrow bandwidth.] In this example, each transceiver 20a and 20b is a single-wavelength dual-fiber bidirectional transceiver comprising a laser 40 and a photodetector 38. The laser 40 is driven to emit light by a laser driver and transmit circuit 56 in response to receipt of differential transmit signals Tx+ and Tx- via transmit electrical signal lines 42a and 42b respectively. The laser driver and transmit circuit 56 comprises electrical circuitry that converts those electrical differential signals to electrical digital signals representing the data to be transmitted by the laser 40. Conversely, the photodetector 38 receives light and converts that detected light into electrical digital signals which are provided to a detector amplifier and receive circuit 54. The detector amplifier and receive circuit 54 in turn comprises electrical circuitry that converts those electrical digital signals to electrical differential receive signals Rx+ and Rx- representing the data received. The electrical differential receive signals Rx+ and Rx- are transmitted to other circuitry via receive electrical signal lines 44a and 44b respectively. Each dual-wavelength single-fiber bidirectional transceiver 70a and 70b receives electrical power having a voltage V_{cc} via transceiver power supply line 46.

In the example implementation shown in FIG. 2, the laser 40 of the dual-wavelength single-fiber bidirectional transceiver 70a is optically coupled to emit light toward the photodetector 38 of the dual-wavelength single-fiber bidirectional transceiver 70b via an optical cable 52 comprising a glass optical fiber 58a, a connector 60a, a gigabit plastic optical fiber 62, a connector 60b and a glass optical fiber 58b connected in series. The laser 40 of the dual-wavelength single-fiber bidirectional transceiver 70b is optically coupled to emit light toward to the photodetector 38 of the dual-wavelength single-fiber bidirectional transceiver 70a via the same optical cable 52. The dual-wavelength single-fiber bidirectional transceiver 70a transmits light having a wavelength λ₁ and receives light having a wavelength receives λ₂. Conversely, the dual-wavelength single-fiber bidirectional transceiver 70b transmits light having a wavelength λ₂ and receives light having a wavelength λ₁. Each of the dual-wavelength single-fiber bidirectional transceivers 70a and 70b comprises a WMD optical filter 36 that passes light having a wavelength λ₁ and reflects light having a wavelength λ₂.

In accordance with a further aspect, the antenna subsystem could be designed utilizing one or more monolithic special-purpose chips that include all the A/D conversion, multiplexing, interleaving and possibly some RF functions such as the modulation of the bit stream. To the extent that these functions can be combined into large-scale application specific integrated circuits (ASICs), those parts are then reusable in other packaging or architectures. For example, multiple such ASICs could be used in parallel to multiply the number of elements. The use of design-specific ASICs is also advantageous because the hardware may be designed to be based on a simple state machine and not require any software. In other words, the DCRPA subsystem 14 would require no sophisticated software algorithms, and should be relatively simple to validate and verify. The RF modulator 22 in the DCRPA subsystem 14 and the RF demodulator 28 in the GNSS SDR 12 are also components in which a dedicated monolithic design may be beneficial.

The satellite navigation system proposed herein differs from previous solutions in the grouping of system functions and the interjection of the multiplexing and modulation of the bit stream into the DCRPA subsystem 14 to enable a single coaxial cable interface (e.g., RF cable 13) between the DCRPA subsystem 14 and the GNSS SDR 12. This is enabled by the multiplexing, modulation, transmission, demodulation and demultiplexing of the bit stream in a manner that allows the digitized signals from each antenna element 2a-2c of the DCRPA subsystem 14 to be reconstructed in the GNSS SDR 12. The GNSS SDR 12 then uses digital beam forming to form beams or nulls in the reception pattern as appropriate to defeat jamming and spoofing. Furthermore, the triplexers (receiver-side triplexer 26 and antenna-side triplexer 24) allows the multiple signals and DC power to be transmitted bidirectionally on the single coaxial cable interface. Another feature of the design shown in FIG. 1 is that the RF part of the system that has an effect on the navigation accuracy is minimized and contained in the antenna. When designed properly, this feature should eliminate many failure modes and make calibration of element-to-element phase error simpler and more stable.

The anti-jamming and anti-spoofing capabilities of the system disclosed herein provide support for more demanding civil applications that are safety related (e.g., autonomous air vehicles, self-driving cars, positive train control). The system is intended to shrink the footprint of "GNSS denied" environments and ensure high availability and continuity of accurate satellite positioning with cyber security to support safety-related applications.

In accordance with one proposed implementation, the GNSS SDR may be configured as a multi-mode receiver (MMR) with significant anti-jamming and anti-spoofing capabilities. Such an enhanced MMR would be a plug-in replacement for all the MMRs currently fielded. Likewise the antenna subsystem with RF processing and digitization would allow simple retrofit of CRPA antennas to existing airframe designs.

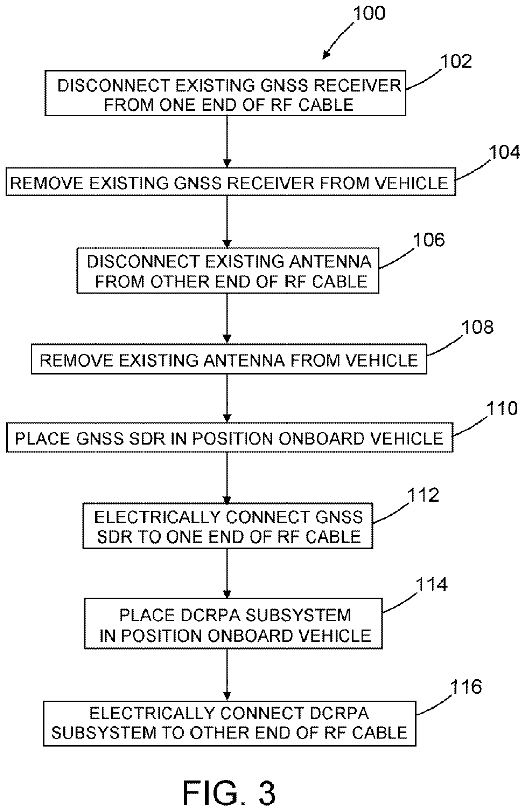

FIG. 3 is a flowchart identifying steps of a method 100 for retrofitting a vehicle to incorporate the satellite navigation system disclosed herein. As noted in the following description, the listed steps need not be performed is the order depicted in FIG. 3. The first phase of the retrofit method involves the removal of some components of the existing satellite navigation system. The existing GNSS receiver onboard the vehicle is disconnected (step 102) from one end of an RF cable to which the GNSS receiver is connected and then removed from the vehicle (step 104). Before, after or during the performance of steps 102 and 104, the existing antenna that receives GPS signals is disconnected (step 106) from the other end of the RF cable to which the GNSS receiver was connected and then removed from the vehicle (step 108). After the existing GNSS receiver has been removed in step 104, the GNSS SDR 12 is placed in the same position onboard the vehicle (step 110) and then electrically connected to the one end of the RF cable (step 112). Similarly, after the existing antenna has been removed in step 108, the DCRPA subsystem 14 is placed in the same position onboard the vehicle (step 114) and then electrically connected to the other end of the RF cable (step 116). A person skilled in the art may appreciate that steps 102, 104, 110 and 112 are performed in order in a first sequence, whereas steps 106, 108, 114 and 116 are performed in order in a second sequence, but the second sequence may be performed before, during or after the first sequence.

One benefit of the DCRPA arrangement proposed herein is that the digital data signal coming from the DCRPA can be split and fed to any desired number of SDR processing units. Thus, a single DCRPA can provide GNSS signal reception to multiple GNSS receivers without any degradation in the C/No or position accuracy of the system. Similarly, an SDR unit could receive digital data streams from multiple DCRPA units, thereby potentially enabling multiple DCRPAs to be deployed in an array. This enables some potentially very flexible redundancy management architectures.

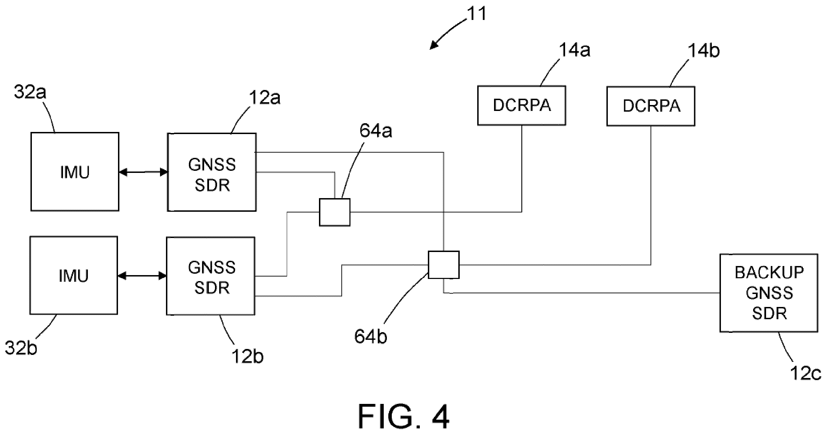

FIG. 4 is a block diagram identifying components of a satellite navigation system 11 in accordance with one embodiment in which two DCRPAs 14a and 14b are cross connected to two GNSS software defined radios 12a and 12b by way of two RF splitters 64a and 64b. In this arrangement, loss of either DCRPA will not result in the loss of navigation. Similarly, loss of either GNSS software defined radio will not result in loss of navigation. In addition, the fact that each GNSS software defined radio 12a and 12b receives the signals from both DCRPAs 14a and 14b would allow either GNSS software defined radio to beamform using all the antenna elements of both DCRPA arrays. This may enable longer baseline interferometry applications for purposes such as attitude and heading determinations while still maintaining the robust anti-jamming and anti-spoofing capabilities. FIG. 4 also shows signals from DCRPA 14b being split three ways in order to feed an additional backup GNSS software defined radio 12c. In reality, any number of GNSS software defined radios could be fed with the digitally modulated bit stream without loss of accuracy in the navigation solution. For the purpose of illustration, FIG. 4 also shows that GNSS software defined radio 12a is electrically connected to an IMU 32a, while GNSS software defined radio 12b is electrically connected to an IMU 32b. The IMU may be packaged outside the GNSS software defined radio, as shown in FIG. 4, or inside the GNSS software defined radio 12, as shown in FIG. 1. In alternative embodiments, the GNSS software defined radio can interface with any number of sensors and use sensor data from those sensors to improve navigation performance.

While onboard systems and methods for enabling satellite navigation by a vehicle have been described with reference to various embodiments, it will be understood by those skilled in the art that various changes may be made and equivalents may be substituted for elements thereof without departing from the teachings herein. In addition, many modifications may be made to adapt the concepts and reductions to practice disclosed herein to a particular situation.

The embodiments disclosed above use one or more processing or computing devices. Such devices typically include a processor, computing device, or controller, such as a general-purpose central processing unit, a microcontroller, a reduced instruction set computer processor, an ASIC, a programmable logic circuit, an FPGA, a digital signal processor, and/or any other circuit or processing device capable of executing the functions described herein. The methods described herein 7712252 18 may be encoded as executable instructions embodied in a non-transitory tangible computer-readable storage medium, including, without limitation, a storage device and/or a memory device. Such instructions, when executed by a processing device, cause the processing device to perform at least a portion of the methods described herein. The above examples are exemplary only, and thus are not intended to limit in any way the definition and/or meaning of the terms "processor" and "computing device".

The process claims set forth hereinafter should not be construed to require that the steps recited therein be performed in alphabetical order (any alphabetical ordering in the claims is used solely for the purpose of referencing previously recited steps) or in the order in which they are recited unless the claim language explicitly specifies or states conditions indicating a particular order in which some or all of those steps are performed. Nor should the process claims be construed to exclude any portions of two or more steps being performed concurrently or alternatingly unless the claim language explicitly states a condition that precludes such an interpretation.

As used in the claims, the disclosed structure corresponding to the term "means for radio frequency processing" includes a filter, an amplifier and a mixer electrically connected in series (such as filter 4a, low-noise amplifier 6a and quadrature mixer 8a seen in FIG. 1) and structural equivalents thereof. As used in the claims, the disclosed structure corresponding to the term "means for digital sampling" includes an analog-to-digital converter and structural equivalents thereof. As used in the claims, the term "antenna/cable interface" should be construed broadly to encompass any one of the following: a diplexer, a triplexer, a bidirectional transceiver and structural equivalents thereof. Similarly, the term "radio/cable interface" should be construed broadly to encompass any one of the following: a diplexer, a triplexer, a bidirectional transceiver and structural equivalents thereof. As used in the claims, the term "cable" should be construed broadly to include RF cables and fiber optic cables.

## Claims

1. A navigation system (10) comprising a cable (13), a GNSS software defined radio (12) electrically connected to one end of the cable, and an antenna subsystem (14) electrically connected to another end of the cable, wherein the antenna subsystem comprises:
first and second antenna elements (2a, 2b) configured to receive radio frequency "RF" signals;
first and second means for radio frequency processing respectively electrically connected to the first and second antenna elements;
first and second means for digital sampling respectively electrically connected to the first and second means for radio frequency processing;
a serializer (20) configured to interleave digital samples received from the first and second means for digital sampling to form a bit stream, wherein the bit stream includes extra bits identifying the antenna element that received the respective radio frequency signal;
an RF modulator (22) configured to convert the bit stream into a modulated bit stream; and
an antenna/cable interface that couples the RF modulator to the cable.

2. The navigation system (10) as recited in claim 1, wherein the GNSS software defined radio (12) comprises an RF demodulator (28) and a radio/cable interface that couples the RF demodulator to the cable (13), the RF demodulator being configured to recover the bit stream from the modulated bit stream.

3. The navigation system (10) as recited in any of claims 1-2, wherein the GNSS software defined radio (12) comprises a software defined radio processor (30) configured to process the bit stream recovered by the RF demodulator to produce a controlled reception pattern.

4. The navigation system (10) as recited in any of claims 1-3, wherein the GNSS software defined radio (12) comprises a clock (34) that outputs a clock signal, and the antenna subsystem (14) comprises a synthesizer (18) that receives the clock signal from the clock via the radio/cable interface, the cable (13) and the antenna/cable interface.

5. The navigation system (10) as recited in any of claims 1-3, wherein the antenna subsystem (14) comprises a clock that outputs a clock signal to a synthesizer (18) that receives that clock signal.

6. The navigation system (10) as recited in any of claims 1-4, wherein the cable (13) is an RF cable, the antenna/cable interface is a first diplexer and the radio/cable interface is a second diplexer.

7. The navigation system (10) as recited in claim 6, wherein the GNSS software defined radio (12) comprises a clock (34) that outputs a clock signal, and the antenna subsystem (14) comprises a synthesizer (18) that receives the clock signal from the clock via the RF cable (13) and first and second diplexers.

8. The navigation system (10) as recited in any of claims 1-4, wherein the cable (13) is an RF cable, the antenna/cable interface is a first triplexer (24) and the radio/cable interface is a second triplexer (26).

9. The navigation system (10) as recited in claim 8, wherein the GNSS software defined radio (12) comprises a clock (34) that outputs a clock signal, the antenna subsystem (14) is configured to receive DC power from the GNSS software defined radio via the RF cable (13) and the first and second triplexers (24, 26), and the antenna subsystem comprises a synthesizer (18) that receives the clock signal from the clock via the RF cable and the first and second triplexers.

10. The navigation system (10) as recited in any of claims 1-4, wherein the cable (13) is a fiber optic cable, the antenna/cable interface is a first bidirectional transceiver (70a) and the radio/cable interface is a second bidirectional transceiver (70b).

11. The navigation system (10) as recited in claim 10, wherein the GNSS software defined radio (12) comprises a clock (34) that outputs a clock signal, and the antenna subsystem (14) comprises a synthesizer (18) that receives the clock signal from the clock via the fiber optic cable (13) and the first and second bidirectional transceivers (70a, 70b).

12. A method for operating a navigation system (10) comprising a GNSS software defined radio (12) connected to one end of a cable (13) by a radio/cable interface and an antenna subsystem (14) connected to another end of the cable by an antenna/cable interface, the method comprising:
(a) radio frequency processing signals received from a plurality of antenna elements (2a, 2b, 2c) to produce IF signals;
(b) digital sampling the IF signals to produce I and Q samples;
(c) interleaving the I and Q samples to form a bit stream;
(d) converting the bit stream into a modulated bit stream, wherein the bit stream includes extra bits identifying the antenna element that received the respective radio frequency signal; and
(e) sending the modulated bit stream to the cable via an antenna/cable interface,
wherein steps (a) through (e) are performed within the antenna subsystem.

13. The method as recited in claim 12, comprising sending a clock signal from the GNSS software defined radio (12) to the antenna subsystem (14) via the cable (13).

14. The method as recited in any of claims 12-13, comprising generating a clock signal using circuitry included in the antenna subsystem (14).

15. The method as recited in any of claims 12-14, comprising supplying DC power from the GNSS software defined radio (12) to the antenna subsystem via the cable (13).

## Patentansprüche

1. Navigationssystem (10), aufweisend ein Kabel (13), ein GNSS-Software Defined Radio (12), das elektrisch mit einem Ende des Kabels verbunden ist, und ein Antennen-Subsystem (14), das elektrisch mit einem anderen Ende des Kabels verbunden ist, wobei das Antennen-Subsystem Folgendes aufweist:
ein erstes und zweites Antennenelement (2a, 2b), die zum Empfangen von Hochfrequenz(HF)-Signalen konfiguriert sind;
ein erstes und zweites Mittel zur Hochfrequenzverarbeitung, die jeweils elektrisch mit dem ersten und zweiten Antennenelement verbunden sind;
ein erstes und zweites Mittel zum digitalen Abtasten, die jeweils elektrisch mit dem ersten und zweiten Mittel zur Hochfrequenzverarbeitung verbunden sind;
einen Serialisierer (20), der dazu konfiguriert ist, digitale Abtastwerte, die von dem ersten und zweiten Mittel zum digitalen Abtasten empfangen werden, zu verschachteln, um einen Bitstrom zu bilden, wobei der Bitstrom zusätzliche Bits enthält, die das Antennenelement identifizieren, welches das jeweilige Hochfrequenzsignal empfangen hat;
einen HF-Modulator (22), der zum Umwandeln des Bitstroms in einen modulierten Bitstrom konfiguriert ist; und
eine Antennen/Kabel-Schnittstelle, die den HF-Modulator mit dem Kabel koppelt.

2. Navigationssystem (10) nach Anspruch 1, wobei das GNSS-Software Defined Radio (12) einen HF-Demodulator (28) und eine Funk/Kabel-Schnittstelle aufweist, die den HF-Demodulator mit dem Kabel (13) koppelt, wobei der HF-Demodulator dazu konfiguriert ist, den Bitstrom aus dem modulierten Bitstrom zurückzugewinnen.

3. Navigationssystem (10) nach einem der Ansprüche 1 bis 2, wobei das GNSS-Software Defined Radio (12) einen Software Defined Radio-Prozessor (30) aufweist, der dazu konfiguriert ist, den durch den HF-Demodulator zurückgewonnenen Bitstrom zu verarbeiten, um ein gesteuertes Empfangsmuster zu erzeugen.

4. Navigationssystem (10) nach einem der Ansprüche 1 bis 3, wobei das GNSS-Software Defined Radio (12) einen Taktgeber (34) aufweist, der ein Taktsignal ausgibt, und das Antennen-Subsystem (14) einen Synthesizer (18) aufweist, der das Taktsignal von dem Taktgeber über die Funk/Kabel-Schnittstelle, das Kabel (13) und die Antennen/Kabel-Schnittstelle empfängt.

5. Navigationssystem (10) nach einem der Ansprüche 1 bis 3, wobei das Antennen-Subsystem (14) einen Taktgeber aufweist, der ein Taktsignal an einen Synthesizer (18) ausgibt, der dieses Taktsignal empfängt.

6. Navigationssystem (10) nach einem der Ansprüche 1 bis 4, wobei das Kabel (13) ein HF-Kabel ist, die Antennen/Kabel-Schnittstelle ein erster Diplexer ist und die Funk/Kabel-Schnittstelle ein zweiter Diplexer ist.

7. Navigationssystem (10) nach Anspruch 6, wobei das GNSS-Software Defined Radio (12) einen Taktgeber (34) aufweist, der ein Taktsignal ausgibt, und das Antennen-Subsystem (14) einen Synthesizer (18) aufweist, der das Taktsignal von dem Taktgeber über das HF-Kabel (13) und den ersten und zweiten Diplexer empfängt.

8. Navigationssystem (10) nach einem der Ansprüche 1 bis 4, wobei das Kabel (13) ein HF-Kabel ist, die Antennen/Kabel-Schnittstelle ein erster Triplexer (24) ist und die Funk/Kabel-Schnittstelle ein zweiter Triplexer (26) ist.

9. Navigationssystem (10) nach Anspruch 8, wobei das GNSS-Software Defined Radio (12) einen Taktgeber (34) aufweist, der ein Taktsignal ausgibt, das Antennen-Subsystem (14) dazu konfiguriert ist, Gleichstrom von dem GNSS-Software Defined Radio über das HF-Kabel (13) und den ersten und zweiten Triplexer (24, 26) zu empfangen, und das Antennen-Subsystem einen Synthesizer (18) aufweist, der das Taktsignal von dem Taktgeber über das HF-Kabel und den ersten und zweiten Triplexer empfängt.

10. Navigationssystem (10) nach einem der Ansprüche 1 bis 4, wobei das Kabel (13) ein Glasfaserkabel ist, die Antennen/Kabel-Schnittstelle ein erster bidirektionaler Transceiver (70a) ist und die Funk/Kabel-Schnittstelle ein zweiter bidirektionaler Transceiver (70b) ist.

11. Navigationssystem (10) nach Anspruch 10, wobei das GNSS-Software Defined Radio (12) einen Taktgeber (34) aufweist, der ein Taktsignal ausgibt, und das Antennen-Subsystem (14) einen Synthesizer (18) aufweist, der das Taktsignal von dem Taktgeber über das Glasfaserkabel (13) und den ersten und zweiten bidirektionalen Transceiver (70a, 70b) empfängt.

12. Verfahren zum Betreiben eines Navigationssystems (10), aufweisend ein GNSS-Software Defined Radio (12), das durch eine Funk/Kabel-Schnittstelle mit einem Ende eines Kabels (13) verbunden ist, und ein Antennen-Subsystem (14), das durch eine Antennen/Kabel-Schnittstelle mit einem anderen Ende des Kabels verbunden ist, wobei das Verfahren Folgendes aufweist:
(a) Hochfrequenz-Verarbeitungssignale, die von mehreren Antennenelementen (2a, 2b, 2c) empfangen werden, um ZF-Signale zu erzeugen;
(b) digitale Abtastung der ZF-Signale, um I- und Q-Abtastwerte zu erzeugen;
(c) Verschachteln der I- und Q-Abtastwerte, um einen Bitstrom zu bilden;
(d) Umwandeln des Bitstroms in einen modulierten Bitstrom, wobei der Bitstrom zusätzliche Bits enthält, die das Antennenelement identifizieren, welches das jeweilige Hochfrequenzsignal empfangen hat; und
(e) Senden des modulierten Bitstroms über eine Antennen/Kabel-Schnittstelle an das Kabel,
wobei die Schritte (a) bis (e) innerhalb des Antennen-Subsystems durchgeführt werden.

13. Verfahren nach Anspruch 12, aufweisend das Senden eines Taktsignals von dem GNSS-Software Defined Radio (12) über das Kabel (13) an das Antennen-Subsystem (14).

14. Verfahren nach einem der Ansprüche 12 bis 13, aufweisend das Erzeugen eines Taktsignals unter Verwendung einer in dem Antennen-Subsystem (14) enthaltenen Schaltung.

15. Verfahren nach einem der Ansprüche 12 bis 14, aufweisend das Zuführen von Gleichstrom von dem GNSS-Software Defined Radio (12) über das Kabel (13) zu dem Antennen-Subsystem.

## Revendications

1. Système de navigation (10) comprenant un câble (13), une radio (12) définie par un logiciel GNSS, ladite radio étant électriquement connectée à une extrémité du câble, et comprenant un sous-système d'antenne (14) électriquement connecté à une autre extrémité du câble, système de navigation dans lequel le sous-système d'antenne comprend :
des premier et second éléments d'antenne (2a, 2b) configurés pour recevoir des signaux de radiofréquence "RF" ;
des premier et second moyens de traitement par radiofréquence électriquement connectés, respectivement, aux premier et second éléments d'antenne ;
des premier et second moyens d'échantillonnage numérique électriquement connectés, respectivement, aux premier et second moyens de traitement par radiofréquence ;
un sérialiseur (20) configuré pour entrelacer des échantillons numériques reçus en provenance des premier et second moyens d'échantillonnage numérique, afin de former un flux binaire, système de navigation dans lequel le flux binaire comprend des bits supplémentaires identifiant l'élément d'antenne qui a reçu le signal de radiofréquence respectif ;
un modulateur RF (22) configuré pour convertir le flux binaire en un flux binaire modulé ; et
une interface antenne/câble qui couple le modulateur RF au câble.

2. Système de navigation (10) selon la revendication 1, dans lequel la radio (12) définie par un logiciel GNSS comprend un démodulateur RF (28) et une interface radio/câble qui couple le démodulateur RF au câble (13), le démodulateur RF étant configuré pour récupérer le flux binaire à partir du flux binaire modulé.

3. Système de navigation (10) selon l'une des revendications 1-2, dans lequel la radio (12) définie par un logiciel GNSS comprend un processeur radio (30) défini par un logiciel, ledit processeur étant configuré pour traiter le flux binaire récupéré par le démodulateur RF, afin de produire un modèle de réception contrôlé.

4. Système de navigation (10) selon l'une quelconque des revendications 1 à 3, dans lequel la radio (12) définie par un logiciel GNSS comprend une horloge (34) qui émet un signal d'horloge, et le sous-système d'antenne (14) comprend un synthétiseur (18) qui reçoit le signal d'horloge provenant de l'horloge via l'interface radio/câble, le câble (13) et l'interface antenne/câble.

5. Système de navigation (10) selon l'une quelconque des revendications 1 à 3, dans lequel le sous-système d'antenne (14) comprend une horloge qui émet un signal d'horloge envoyé à un synthétiseur (18) qui reçoit ce signal d'horloge.

6. Système de navigation (10) selon l'une quelconque des revendications 1 à 4, dans lequel le câble (13) est un câble RF, l'interface antenne/câble est un premier diplexeur et l'interface radio/câble est un second diplexeur.

7. Système de navigation (10) selon la revendication 6, dans lequel la radio (12) définie par un logiciel GNSS comprend une horloge (34) qui émet un signal d'horloge, et le sous-système d'antenne (14) comprend un synthétiseur (18) qui reçoit le signal d'horloge provenant de l'horloge via le câble RF (13) et les premier et second diplexeurs.

8. Système de navigation (10) selon l'une quelconque des revendications 1 à 4, dans lequel le câble (13) est un câble RF, l'interface antenne/câble est un premier triplexeur (24) et l'interface radio/câble est un second triplexeur (26).

9. Système de navigation (10) selon la revendication 8, dans lequel la radio (12) définie par un logiciel GNSS comprend une horloge (34) qui émet un signal d'horloge, le sous-système d'antenne (14) est configuré pour recevoir, via le câble RF (13) et les premier et second triplexeurs (24, 26), une alimentation en courant continu provenant de la radio définie par un logiciel GNSS, et le sous-système d'antenne comprend un synthétiseur (18) qui reçoit le signal d'horloge provenant de l'horloge via le câble RF et les premier et second triplexeurs.

10. Système de navigation (10) selon l'une quelconque des revendications 1 à 4, dans lequel le câble (13) est un câble de fibre optique, l'interface antenne/câble est un premier émetteur-récepteur bidirectionnel (70a) et l'interface radio/câble est un second émetteur-récepteur bidirectionnel (70b).

11. Système de navigation (10) selon la revendication 10, dans lequel la radio (12) définie par un logiciel GNSS comprend une horloge (34) qui émet un signal d'horloge, et le sous-système d'antenne (14) comprend un synthétiseur (18) qui reçoit le signal d'horloge provenant de l'horloge via le câble de fibre optique (13) et les premier et second émetteurs-récepteurs bidirectionnels (70a, 70b).

12. Procédé pour faire fonctionner un système de navigation (10) comprenant une radio (12) définie par un logiciel GNSS, ladite radio étant connectée à une extrémité d'un câble (13) par une interface radio/câble, et comprenant un sous-système d'antenne (14) connecté à une autre extrémité du câble par une interface antenne/câble, le procédé comprenant :
(a) des signaux de traitement par radiofréquence, lesdits signaux étant reçus en provenance d'une pluralité d'éléments d'antenne (2a, 2b, 2c) afin de produire des signaux FI ;
(b) un échantillonnage numérique des signaux FI afin de produire des échantillons I et Q ;
(c) l'entrelacement des échantillons I et Q afin de former un flux binaire ;
(d) la conversion du flux binaire en un flux binaire modulé, procédé dans lequel le flux binaire comprend des bits supplémentaires identifiant l'élément d'antenne qui a reçu le signal de radiofréquence respectif ; et
(e) l'envoi du flux binaire modulé au câble via une interface antenne/câble,
procédé dans lequel les étapes (a) à (e) sont exécutées dans le cadre du sous-système d'antenne.

13. Procédé selon la revendication 12, comprenant l'envoi au sous-système d'antenne (14), via le câble (13), d'un signal d'horloge provenant de la radio (12) définie par un logiciel GNSS.

14. Procédé selon l'une des revendications 12-13, comprenant le fait de générer un signal d'horloge en utilisant des circuits se trouvant dans le sous-système d'antenne (14).

15. Procédé selon l'une quelconque des revendications 12 à 14, comprenant l'alimentation en courant continu, via le câble (13), depuis la radio (12) définie par un logiciel GNSS jusqu'au sous-système d'antenne.
